# EUROPEAN PATENT APPLICATION

(11) **EP 4 368 075 A1**
(43) Date of publication of application: **15.05.2024**
(21) Application number: 22837524.2
(22) Date of filing: 27.06.2022
(51) Int. Cl.: A47J 27/00, G06Q 50/10

(54) **RECIPE PRESENTATION METHOD, COOKING DEVICE, RECIPE PRESENTATION PROGRAM, AND RECIPE PRESENTATION SYSTEM**

(30) Priority: 06.07.2021 JP 2021111883
(71) Applicant: Panasonic Intellectual Property Management Co., Ltd., Kadoma-shi, Osaka 571-0057 (JP)
(72) Inventor: KAWAKAMI, Takuya, Osaka 571-0057 (JP); SUGIMURA, Tadanori, Osaka 571-0057 (JP); KUNITAKE, Yuji, Osaka 571-0057 (JP); MIYAZONO, Yuki, Osaka 571-0057 (JP)
(74) Representative: SSM Sandmair
(86) International application number: PCT/JP2022/025526
(87) International publication number: WO 2023/282108

(57) **Abstract**

One embodiment of the present disclosure is a recipe presentation system that has a server, a cooking device, and an information terminal device. The server transmits, to the information terminal device, information for performing registration that enables cooking by using an accessory of the cooking device. With the registration, the information terminal device provides, to the cooking device, setting information and the like related to cooking recipes for cooking by using the accessory. A convenience of cooking by using the accessory of the cooking device is increased for a user who owns the accessory requiring the registration.

## Description

### TECHNICAL FIELD

The present disclosure relates to a recipe presentation method, a cooking device, a recipe presentation program, and a recipe presentation system that provide information (recipe information) related to cooking.

### BACKGROUND ART

With the development of technology such as IoT (Internet of Things), there is provided an electric home appliance that can obtain or provide various kinds of information through communication (e.g., see Patent Literature 1). Patent Literature 1 discloses that information related to a cooking menu, which has been done by a cooking device, is posted on a communication tool management part of a serve through a communication network.

### Citation List

### Patent Literature

PTL 1: Unexamined Japanese Patent Publication No. 2016-58789

### SUMMARY OF THE INVENTION

The present inventors recognize a necessity of using communication technology to improve user's convenience more in cooking, and thus reach a technique of the present disclosure. The present disclosure aims to improve user's convenience in cooking.

The present disclosure includes a recipe presentation method for a cooking device as one aspect. The recipe presentation method of the present aspect includes performing registration that enables cooking by using an accessory of the cooking device, and providing, to the cooking device, setting information and the like related to a cooking recipe for cooking by using the accessory.

The present disclosure includes a cooking device that can communicate with a server through the Internet, as another aspect. The cooking device of the present aspect has a wireless communication module, and a control device storing registration that enables cooking by using an accessory of the cooking device. When the registration, which enables cooking by using the accessory, is performed, the control device can use a control sequence related to a cooking recipe for cooking by using the accessory.

The present disclosure includes a recipe presentation program for a cooking device, as another aspect. The recipe presentation program of the present aspect includes a procedure of performing registration that enables cooking by using an accessory of the cooking device, and a procedure of providing, to the cooking device, setting information and the like related to a cooking recipe for cooking by using the accessory. The present aspect may be a recording medium that stores the recipe presentation program.

The present disclosure includes a recipe presentation system that has a server, a cooking device, and an information terminal device, as another aspect. The server transmits, to the information terminal device, information for registration that enables cooking by using an accessory of the cooking device. With the registration, the information terminal device provides, to the cooking device, setting information and the like related to a cooking recipe for cooking by using the accessory.

According to the technique of the present disclosure, a convenience of a user of the cooking device can be improved.

### BRIEF DESCRIPTION OF DRAWINGS

FIG. 1 is a perspective view of a cooking device in accordance with an exemplary embodiment of the present disclosure in the state where a door is closed.
FIG. 2 is a perspective view of the cooking device in accordance with the exemplary embodiment in the state where the door is opened.
FIG. 3A is a perspective view of an accessory (square plate).
FIG. 3B is a perspective view of an accessory (grill plate).
FIG. 4 A is an exploded perspective view of an accessory (steamer).
FIG. 4B is a view schematically showing the accessory (steamer) placed in a heating chamber.
FIG. 5 is a block diagram showing an outline of a cooking system in accordance with the exemplary embodiment.
FIG. 6 is a view showing a recipe server and an equipment server in a server, a control device of a cooking device, and data stored in each storage.
FIG. 7 is a block diagram schematically showing a configuration and a function of the control device of the cooking device in accordance with the exemplary embodiment.
FIG. 8 is a sequence diagram showing a procedure from recipe display and recipe selection to completion of preparation for cooking start or completion of download.
FIG. 9 is a view showing transition of a display screen that is displayed during execution of the procedure shown in FIG. 8.
FIG. 10 is a sequence diagram showing a procedure from display of accessory information and registration of an accessory to completion of preparation for cooking start or completion of download in the cooking device.
FIG. 11 is a view showing transition of the display screen displayed on a display of the information terminal device during execution of the procedure shown in FIG. 10.
FIG. 12 is a view showing transition of the display screen until when setting information and the like related to accessory recipes are downloaded to the control device to start cooking during execution of the procedure shown in FIG. 8.
FIG. 13 is another view showing transition of the display screen displayed on the display of the information terminal device during execution of the procedure shown in FIG. 10.
FIG. 14 is another view showing transition of the display screen until when the setting information and the like related to accessory recipes are downloaded to the control device to start cooking during execution of the procedure shown in FIG. 8.
FIG. 15 is a view showing an accessory name, an accessory description, and a list of the related recipes.

### DESCRIPTION OF EMBODIMENTS

As an exemplary embodiment of the present disclosure, a technique for providing recipe information of dishes that can be cooked by using cooking equipment will be described. The technique of the present disclosure is applicable to cooking equipment that can execute at least one part of cooking procedures.

The cooking equipment of this kind includes a microwave oven, an oven, a toaster, a roaster, a gas range (gas stove), a rice cooker, a home bakery (bread machine), an induction-heating cooking device (induction hob), a hot plate (electric griddle), a pressure cooker, a blender (blender), a juicer (juicer), and a food processor (food processor), for example.

Hereinafter, an example of providing recipe information of dishes that can be cooked by using a microwave oven will be described.

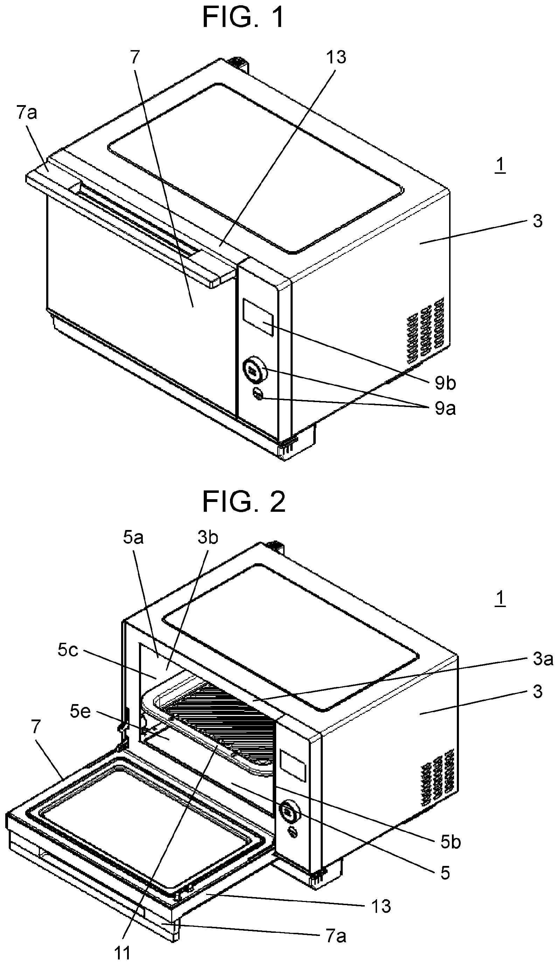

FIGS. 1 and 2 show an appearance of cooking device 1 in accordance with an exemplary embodiment of the present disclosure. FIG. 1 is a perspective view of cooking device 1 in the state where door 7 is closed. FIG. 2 is a perspective view of cooking device 1 in the state where door 7 is opened.

As shown in FIGS. 1 and 2, cooking device 1 is provided with housing 3, heating chamber 5, and door 7. Housing 3 has front frame 3A disposed in a front face thereof, and front opening 3B surrounded by front frame 3A. Heating chamber 5 is installed in housing 3 behind front opening 3B. Door 7 covers front opening 3B openably and closably. Heating chamber 5 has upper wall 5a, right-hand side wall 5b, left-hand side wall 5c, a back wall (not shown), bottom wall 5e, and an inner space surrounded by these walls.

Door 7 is pivotally supported by a portion of front frame 3A below front opening 3B about a horizontal rotation shaft. When handle 7a, which is attached to outer frame 13 of door 7, is pulled to open door 7, front opening 3B of heating chamber 5 is opened. When door 7 is closed such that door 7 is in an upright state, front opening 3B of heating chamber 5 is closed.

In a front view of cooking device 1, display 9b and operator 9a are disposed in front frame 3A on the right-hand side of door 7. Display 9b is a liquid crystal touch panel for displaying a menu screen or the like, for example. A communication device for controlling communication between external devices is disposed in door 7.

Display 9b displays information, such as a cooking recipe obtained by the communication device from the outside, or the like. Operator 9a includes a push button, such as a start button, and a dial, for example, and can receive user's instructions. A heating target (food) is placed in heating chamber 5 and door 7 is closed by a user. After that, when the start button is pressed, heating of the heating target is started.

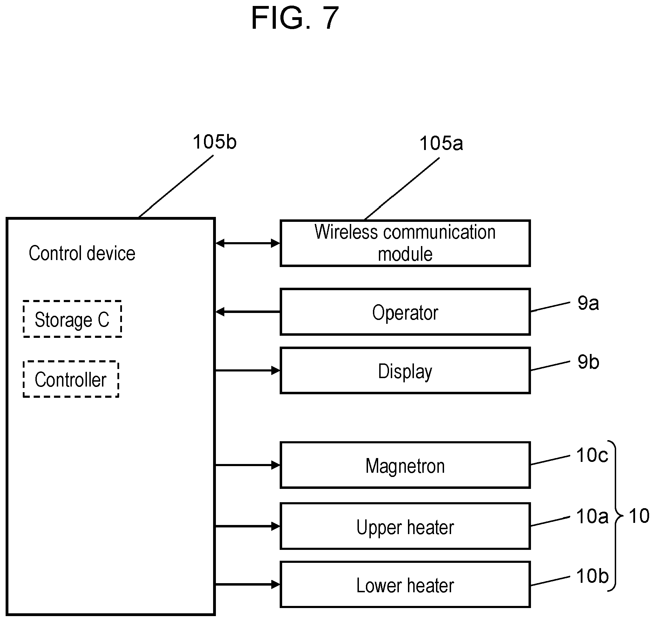

Magnetron 10c (see FIG. 7) for generating microwave is disposed below bottom wall 5e of heating chamber 5. The generated microwave propagates in a waveguide (not shown) disposed below heating chamber 5, and then is radiated into heating chamber 5 through bottom wall 5e of heating chamber 5. The heating target, which is placed in heating chamber 5, is heated by the radiated microwave. In the present exemplary embodiment, the heating of a heating target using microwave is referred to as microwave heating.

Upper heater 10a (see FIG. 7) is disposed in upper wall 5a of the heating chamber, and lower heater 10b (see FIG. 7) is disposed below bottom wall 5e of the heating chamber. Upper heater 10a and lower heater 10b both are heaters of a radiation type, such as a sheath heater, for example.

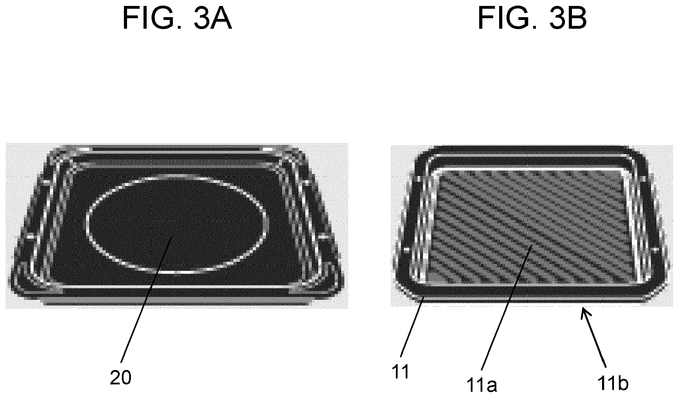

FIG. 3A is a perspective view of square plate 20, which is made of iron, serving as an accessory of cooking device 1. FIG. 3B is a perspective view of grill plate 11 serving as an accessory of cooking device 1.

When square plate 20 shown in FIG. 3A is placed in heating chamber 5, upper heater 10a and lower heater 10b can be used to heat a heating target placed on square plate 20. In the present exemplary embodiment, the heating of a heating target using upper heater 10a and lower heater 10b is referred to as oven heating.

As shown in FIG. 2, when grill plate 11 shown in FIG. 3B is placed in heating chamber 5, the heat emitted from grill plate 11 can be used to heat a heating target placed on grill plate 11.

Grill plate 11 is made of a high thermal conductivity metal such as copper or aluminum. Surface 11a of grill plate 11 is coated with a material obtained by mixing a silane compound with a fluorine-based or a silicon-based paint having high heat resistance, for example. Surface 11a of grill plate 11 may further be coated with a material in which titanium dioxide, serving as a photocatalyst material, or the like is mixed. Thus, grill plate 11 will have hydrophile properties.

Grill plate 11 has a heating element disposed on back surface 11b thereof. This heating element contains a ferrite as a main component. Radiated microwave is absorbed therein to emit heat. When back surface 11b of grill plate 11 is irradiated with microwave, grill plate 11 is heated by the heat emitted from the heating element. Grill plate 11, heated above, heats a heating target placed on grill plate 11.

Simultaneously with the heating using grill plate 11, radiation heating using upper heater 10a can be used to heat the heating target. In the present exemplary embodiment, the heating of a heating target using upper heater 10a and grill plate 11 is referred to as grill heating.

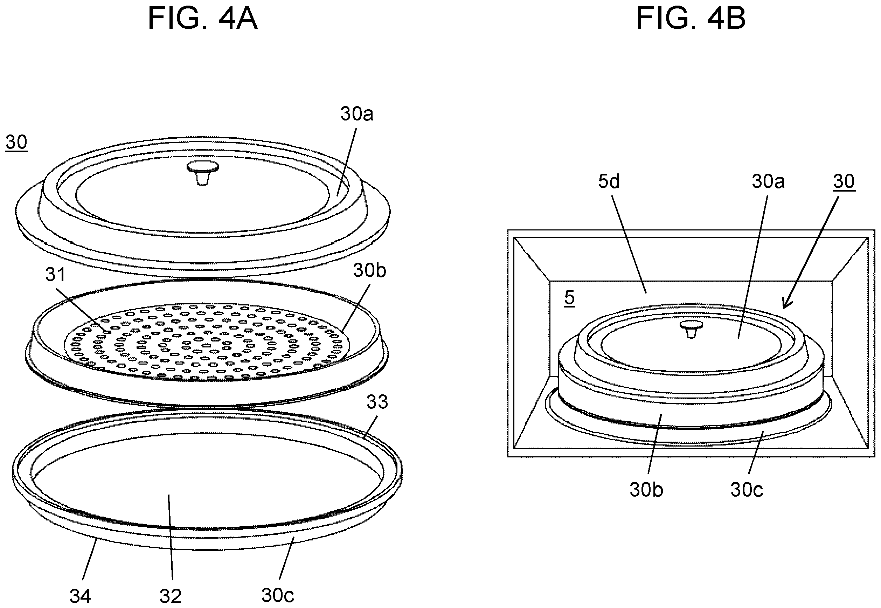

FIG. 4A is an exploded perspective view of steamer 30, which is one of accessories of cooking device 1. FIG. 4B is a view schematically showing steamer 30 placed in heating chamber 5.

As shown in FIG. 4A, steamer 30 is mainly made of stainless steel. Steamer 30 includes lid 30a, placing part 30b having a plurality of holes 31, and water storing part 30c. First, a user stores water in water storing part 30c, and then puts placing part 30b on rim part 33 of water storing part 30c. Furthermore, a user places a heating target on placing part 30b, and then covers placing part 30b with lid 30a.

As shown in FIG. 4B, steamer 30, mentioned above, is placed in heating chamber 5. After that, microwave is radiated into heating chamber 5, so that a cooking target can be steamed and baked within steamer 30.

Surface 32 of water storing part 30c is made of a high thermal conductivity metal such as copper or aluminum. Surface 32 of water storing part 30c is coated with a material obtained by mixing a silane compound with a fluorine-based or a silicon-based paint having high heat resistance, for example. Surface 32 of water storing part 30c may further be coated with a material in which titanium dioxide, serving as a photocatalyst material, or the like is mixed. Thus, water storing part 30c will have hydrophile properties.

Steamer 30 has a heating element that is disposed on back surface 34 located in a bottom of water storing part 30c. The heating element contains a ferrite as a main component. Radiated microwave is absorbed therein to emit heat. When back surface 34 of water storing part 30c is irradiated with microwave, water storing part 30c is heated by the heat emitted from the heating element. Water storing part 30c, heated above, heats the water stored in water storing part 30c.

The water, which is heated in water storing part 30c, is evaporated to generate hot steam. The hot steam is supplied to an inner space of steamer 30 through the plurality of holes 31, so that the heating target can be steamed and baked within steamer 30.

A convection unit (not shown), which includes a convection heater and a circulation fan, may be disposed in an inner space of housing 3 provided behind back wall 5d (see FIG. 4B) of heating chamber 5. In this case, an intake hole and an exhaust hole may be provided in back wall 5d of heating chamber 5, and an exhaust port for exhausting air, within heating chamber 5, to the outside may be provided in a lower part of front frame 3A of housing 3.

In this structure, when the circulation fan is rotated, the air within heating chamber 5 is moved from the intake hole to behind back wall 5d. This air is heated by the convection heater, and then changed to a hot wind. This hot wind is returned into heating chamber 5 from the exhaust hole by the circulation fan. In this way, the convection unit supplies the hot wind into heating chamber 5, so that the heating target is heated uniformly within heating chamber 5.

In the case where square plate 20 shown in FIG. 3A is placed in heating chamber 5, the radiation heat of upper heater 10a and the hot wind of the convection unit may be used to heat a heating target placed on square plate 20. In the present exemplary embodiment, the heating of a heating target using upper heater 10a and the convection unit is referred to as convection heating.

A steam generation unit (not shown) may be disposed in an inner space of housing 3, which is provided on an outer side of right-hand side wall 5b. A tank for storing water may be provided in an inner space of housing 3, which is provided below bottom wall 5e.

When the water stored in the tank is supplied to the steam generation unit (not shown), the steam generation unit heats the water to generate superheated steam. The superheated steam is supplied into heating chamber 5 through a steam pipe that connects the steam generation unit and heating chamber 5, so that a heating target is steam- heated.

FIG. 7 is a block diagram schematically showing a configuration and a function of control device 105b of cooking device 1. As shown in FIG. 7, cooking device 1 is provided with heating device 10. Heating device 10 includes magnetron 10c, upper heater 10a, lower heater 10b, a steam heating device, a convection unit, and the like. Cooking device 1 can use heating device 10 to heat foods by a plurality of heating methods.

In each heating method, heating conditions, such as heating temperature, cooking time, and output power, can be set as variable. A heating target can be heated by a suitable heating method and under suitable heating conditions, according to a type of dish, a cooking method, an amount of food serving as a heating target, a type of accessory (e.g., a square plate, a grill plate, a steamer), and the like. Thus, cooking can be finished more satisfactorily.

For instance, if a food is heated sufficiently to the inside, microwave heating will be suitable. If a surface of food is browned appropriately, grill heating will be suitable. If a food is steamed and baked, steam heating will be suitable.

To switch heating methods and heating conditions appropriately during cooking, cooking device 1 retains setting information in advance. The setting information is information for setting a suitable heating method and heating conditions automatically according to a type of dish. The setting information represents setting contents related to a heating method and heating conditions in a time series manner. By setting a heating method and heating conditions according to the setting information, cooking device 1 can perform cooking automatically by a method suitable for a type of food.

As preparation to cause cooking device 1 to execute such automatic cooking, a user prepares necessary ingredients, performs preparations, and the like. After that, the user puts a heating target into heating chamber 5. Conventionally, recipe information, such as ingredients and a preparation method, is described in an instruction manual attached to cooking device 1. A user needs to perform the work, such as preparations, while referring to the recipe information described in the instruction manual.

Cooking device 1 may retain recipe information and, according to user's instructions, display the recipe information on display 9b. However, unless cooking device 1 is installed at a position where a user can easily check the recipe information visually during cooking, the user can hardly check the recipe information displayed on display 9b.

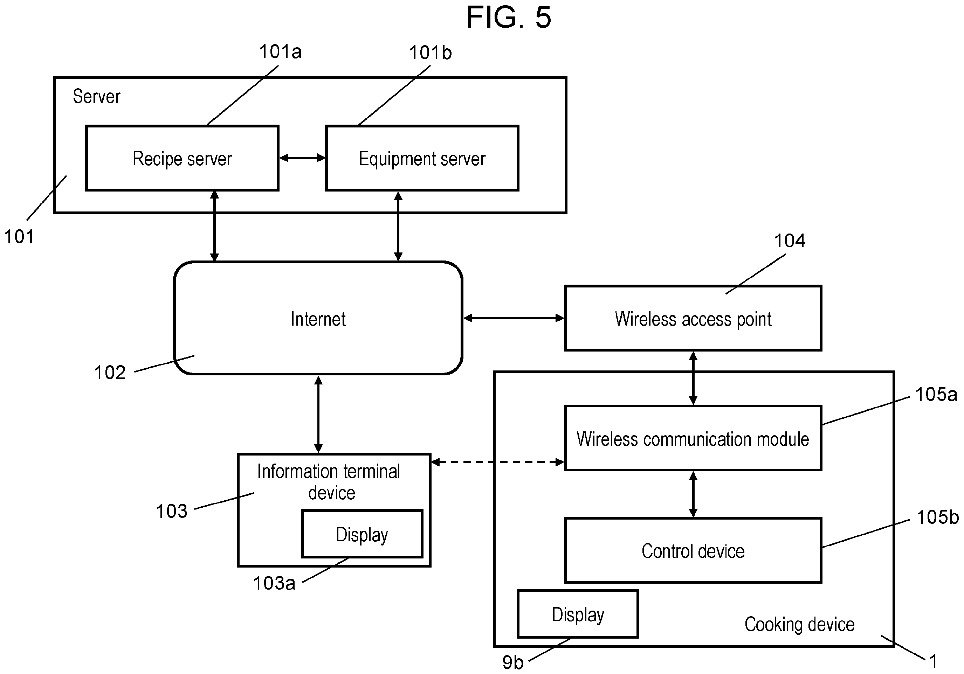

FIG. 5 is a block diagram showing an outline of a cooking system in accordance with the exemplary embodiment of the present disclosure. As shown in FIG. 5, the cooking system in accordance with the present exemplary embodiment provides, to information terminal device 103, recipe information related to a procedure for making a dish using cooking device 1. A user can easily perform the work, such as preparations, while referring to recipe information displayed on information terminal device 103. Accordingly, user's convenience can be improved.

The cooking system in accordance with the present exemplary embodiment is provided with cooking device 1, server 101, and information terminal device 103. Server 101 communicates with cooking device 1 through Internet 102. Information terminal device 103 has display 103A that communicates with server 101 or the like.

Display 103A may be constituted by a touch panel serving as an operator. Information terminal device 103 includes at least one of a smart phone, a tablet computer, a personal computer, or the like. The cooking system may also include a plurality of information terminal devices 103. Information terminal device 103 may communicate with cooking device 1 through a wireless communication module, such as an NFC (near field communication) (see dashed-line arrow shown in FIG. 5).

Server 101 includes recipe server 101a that manages a recipe or the like, and equipment server 101b that manages equipment information of cooking device 1 or the like. Typically, server 101 is constituted by cloud computing. However, server 101 may be constituted by one server.

Cooking device 1 is provided with wireless communication module 105a, control device 105b, and display 9b. Wireless communication module 105a communicates with server 101 through wireless access point 104 and Internet 102.

Wireless access point 104 is constituted by a wireless LAN (local area network) router or the like. Wireless communication module 105a uses the wireless LAN to transmit information to server 101 or receive information from server 101 through wireless access point 104.

As mentioned above, cooking device 1 includes a microwave oven, an oven, a toaster, a roaster, a gas stove, a rice cooker, a home bakery, an induction-heating cooking device, a hot plate, a pressure cooker, a blender, a juicer, a food processor, and the like. Cooking device 1 may be not only home use but also business use.

Information terminal device 103 can browse a website through Internet 102, or download voice information and image information from server 101. Hereinafter, download may be abbreviated as DL.

Information terminal device 103 includes a control device, such as a microprocessor, and a memory device that stores various kinds of data. The memory device stores an application software (hereafter, referred to as application) for utilizing various kinds of services.

By executing the application, information terminal device 103 can download menu information, recipe information, IDs (identification) related thereto, or the like to cooking device 1 through Internet 102 and wireless access point 104. Information terminal device 103 can further obtain information from cooking device 1 through wireless access point 104 and Internet 102.

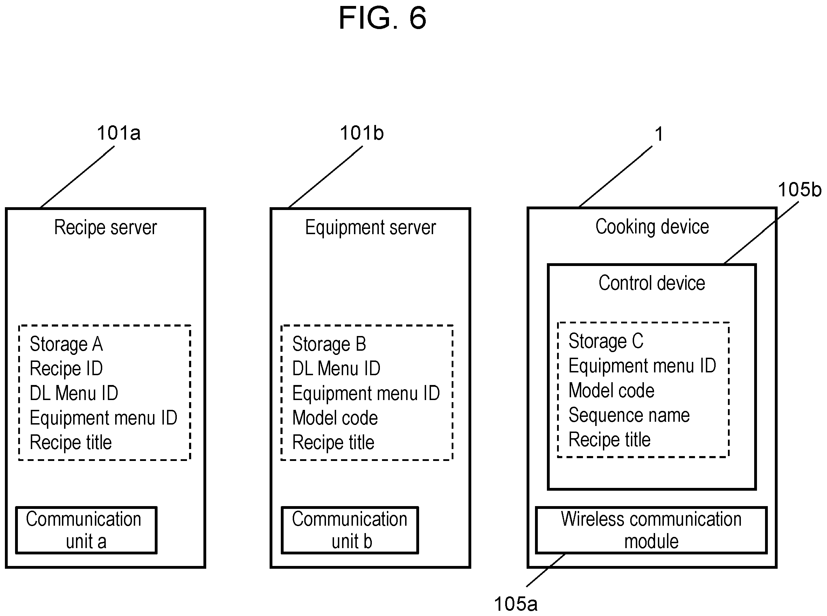

FIG. 6 is a view showing recipe server 101a and equipment server 101b in server 101, control device 105b of cooking device 1, and data stored in each storage.

As shown in FIG. 6, recipe server 101a, equipment server 101b, and control device 105b include storage A, storage B, and storage C, respectively. Furthermore, recipe server 101a and equipment server 101b include communication unit a and communication unit b, respectively. As mentioned above, cooking device 1 includes wireless communication module 105a.

Storage C of control device 105b stores an equipment menu ID, a model code (model name), a sequence name, a recipe title, and the like in advance. In the case of a newly downloaded cooking menu from server 101, control device 105b further causes storage C to store a download menu ID (DL menu ID). Storage C stores the DL menu ID, the model code, the equipment menu ID, the recipe title, and the sequence name as a table.

Storage B of equipment server 101b stores a DL menu ID, an equipment menu ID, a model code, and a recipe title as a table. Storage A of recipe server 101a stores a recipe ID, a DL menu ID, an equipment menu ID, and a recipe title as a table.

These IDs are used to associate various kinds of recipes with cooking sequences of cooking device 1, so that the various kinds of recipes can be cooked by using cooking device 1 appropriately. If a new recipe is prepared in server 101, a cooking sequence, which is based on the new recipe, can also be downloaded to control device 105b of cooking device 1. A cooking sequence based on a new recipe can also be selected from cooking sequences that are previously stored in cooking device 1.

As shown in FIG. 7, control device 105b of cooking device 1 is provided with storage C including a semiconductor memory, and a controller including a microcomputer and an input/output circuit.

Control device 105b performs bidirectional communication with wireless communication module 105a. Control device 105b receives input information from operator 9a. Control device 105b transmits information for displaying on display 9b.

Control device 105b controls wireless communication module 105a, heating device 10, and display 9b based on the information that is inputted from operator 9a, a temperature sensor (not shown), or the like. Operator 9a is constituted by a mechanical button, a touch panel, or the like. In the case where operator 9a is constituted by a touch panel, the touch panel may function as at least one portion of display 9b. Heating device 10 includes magnetron 10c, upper heater 10a, and lower heater 10b.

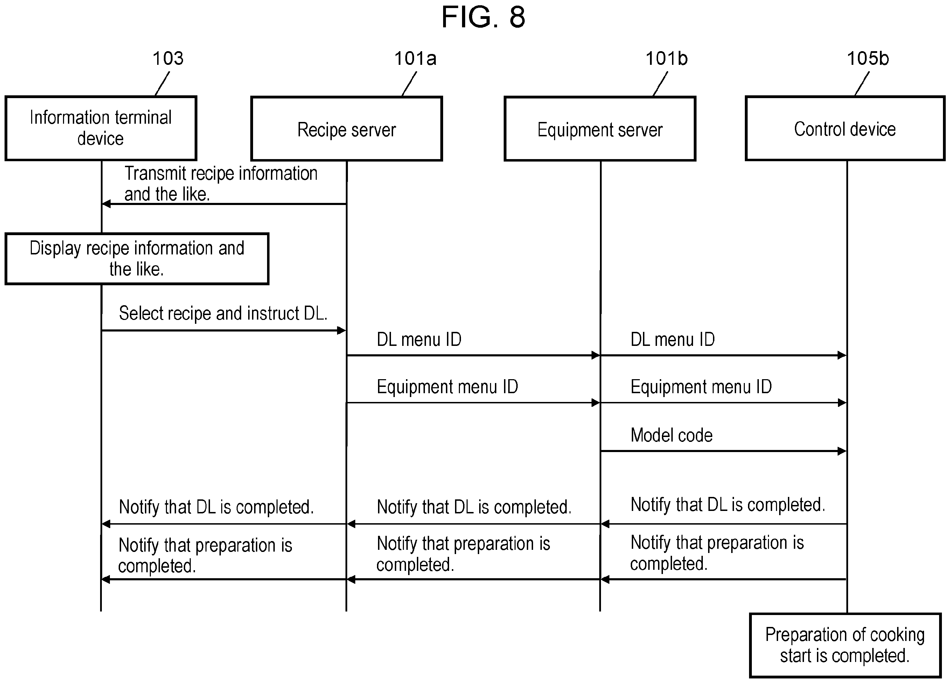

FIG. 8 is a sequence diagram showing a procedure from recipe display and recipe selection in information terminal device 103 to completion of preparation for cooking start or completion of download in cooking device 1.

In FIG. 8, recipe server 101a provides information on cooking, such as a recipe and a menu. Recipe server 101a retains setting information, which can be used by cooking device 1, for each type of dishes.

Depending on a type of cooking device 1, a heating method executable by device 1 and heating conditions settable by cooking device 1 may be changed. Therefore, for the same type of dishes, recipe server 101a retains different pieces of setting information each corresponding to the type of cooking device 1. Recipe server 101a provides the setting information, which depends on the type of cooking device 1, to cooking device 1.

Depending on a type of cooking device 1, contents necessary for automatic cooking, such as ingredients and preparations, may also be changed. Therefore, for the same type of dishes, recipe server 101a retains different pieces of recipe information each corresponding to the type of cooking device 1. For user's browsing, recipe server 101a provides menu information and recipe information, which depend on the type of cooking device 1, to information terminal device 103.

Information terminal device 103 stores an application for utilizing various kinds of services, in advance. By executing the application, information terminal device 103 can download information and data to cooking device 1 through Internet 102 and wireless access point 104. In the present exemplary embodiment, the information and the data include menu information, recipe information, setting information such as IDs related thereto, and a control software of cooking device 1.

Further, information terminal device 103 can also obtain information from cooking device 1 through wireless access point 104 and Internet 102. Hereinafter, the IDs and the control software of cooking device 1 are referred to as "setting information and the like."

Information terminal device 103 displays an icon for starting an application on display 103A. Usually, display 103A displays a plurality of icons. When a user touches any one of those icons, information terminal device 103 starts an application corresponding to the icon. Thus, a user can perform recipe selection and various kinds of registrations through the application.

In information terminal device 103, the application executes the following operations. According to user's instructions, information, such as a model of cooking device 1, is registered in recipe server 101a. A connection between information terminal device 103 and equipmnet server 101b is established, and a connection between information terminal device 103 and cooking device 1 is established. Further, according to user's instructions, a DL menu is requested to recipe server 101a. The DL menu is a list of types of dishes whose setting information and the like can be downloaded to cooking device 1 from recipe server 101a.

Depending on a type of cooking device 1, recipe server 101a extracts types of dishes whose setting information and the like, which can be used by cooking device 1, are prepared. Recipe server 101a generates a DL menu, which is a list of types of dishes, extracted above, and transmits it to information terminal device 103. Information terminal device 103 displays the DL menu, which has been received from recipe server 101a, on display 103A.

When a dish to be cooked is selected from the DL menu, information terminal device 103 receives a request for displaying recipe information related to the selected dish on display 103A. Information terminal device 103 transmits, to recipe server 101a, a display request of the recipe information, which includes a DL menu ID indicating a type of the selected dish.

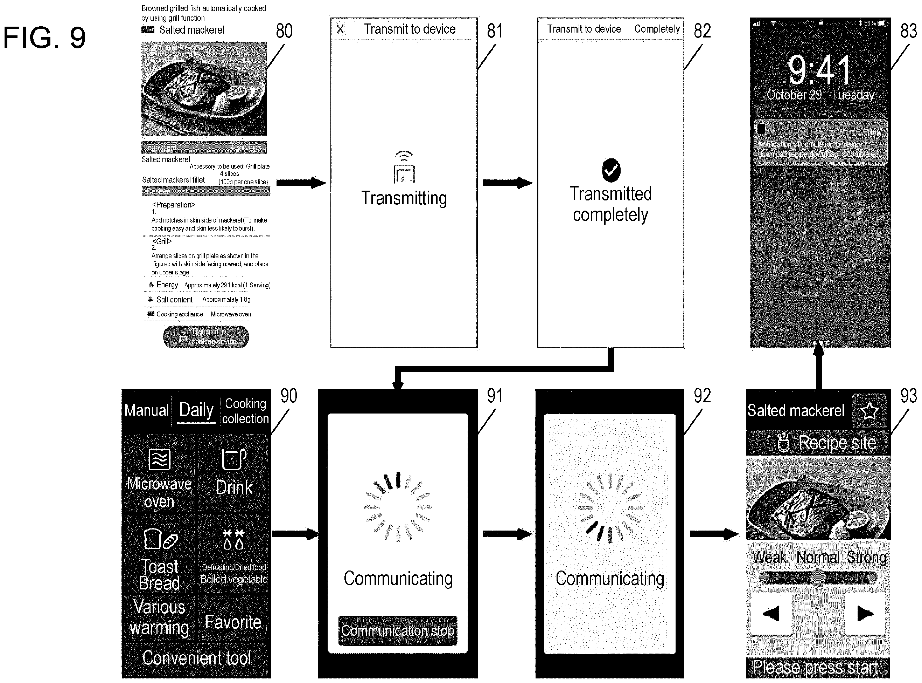

Recipe server 101a transmits recipe information, which is identified by the received DL menu ID, to information terminal device 103. Information terminal device 103 displays recipe information 80 (see FIG. 9) that has been received from recipe server 101a.

FIG. 9 shows transition of a display screen displayed on display 9b of cooking device 1 and transition of a display screen displayed on display 103A of information terminal device 103 during execution of the procedure shown in FIG. 8. Specifically, FIG. 9 exemplarily shows recipe information of "salted mackerel."

As shown in FIG. 9, recipe information 80 includes a download button for downloading setting information and the like to cooking device 1. When a user touches the download button, information terminal device 103 receives a request for downloading setting information and the like of the selected dish to cooking device 1.

When receiving the request for downloading setting information and the like, information terminal device 103 transmits a request of the download, which includes a DL menu ID of the selected dish, to recipe server 101a. Information terminal device 103 displays screen 81 on display 103A during transmission of the request of download to recipe server 101a. When the request of download is transmitted, information terminal device 103 displays screen 82 on display 103A, thereby notifying that the download is completed.

As shown in FIG. 8, recipe server 101a provides menu information and recipe information to information terminal device 103. Information terminal device 103 displays the menu information and the recipe information on display 103A. When a user selects a recipe, information terminal device 103 transmits a DL menu ID, which corresponds to the selected recipe information, to recipe server 101a.

Finally, recipe server 101a transmits setting information and the like, which are identified by the DL menu ID, and an equipment menu ID corresponding thereto to control device 105b of cooking device 1 through equipment server 101b.

When starting to receive the setting information and the like from recipe server 101a (see FIG. 9), control device 105b causes display 9b to switch a display screen from top screen 90 to screen 91. When the setting information and the like have been received completely, control device 105b causes display 9b to display screen 93 immediately after causing display 9b to display screen 92 (see FIG. 9).

Screen 93 is a screen for using the received setting information and the like to start automatic cooking of dishes. Control device 105b causes display 9b to display this screen, thereby notifying a user that preparation of cooking start is completed.

As shown in FIG. 8, in the process, equipment server 101b associates the setting information and the like, which are identified by the DL menu ID, with an equipment menu ID and a model code. Equipment server 101b transmits the equipment menu ID and the model code to control device 105b of cooking device 1.

Control device 105b recognizes the model code of cooking device 1 and a sequence name corresponding to the equipment menu ID. Through equipment server 101b and recipe server 101a, control device 105b notifies information terminal device 103 that cooking information or the like has been downloaded completely.

Control device 105b has prepared cooking start of cooking device 1 completely using a control software corresponding to the corresponding sequence name. The setting information and the like, which are transmitted to control device 105b, do not necessarily need to correspond to a sequence name. The setting information and the like may be new setting information and the like, which are not retained in control device 105b.

Control device 105b notifies equipment server 101b that the setting information and the like have been downloaded completely. Finally, equipment server 101b uses push notification to notify information terminal device 103 that the setting information and the like have been downloaded to cooking device 1 completely. Control device 105b may further use push notification to notify information terminal device 103 that cooking start of cooking device 1 has been prepared completely. Information terminal device 103 displays screen 83 (see FIG. 9), which indicates contents of the received push notification, on display 103A.

Accordingly, a user can download setting information and the like, which are not retained in cooking device 1 in advance, to cooking device 1 from recipe server 101a and use them. A user can request the download of setting information and the like from information terminal device 103.

Information terminal device 103 may return the display screen of display 103A from screen 83 of push notification to a screen of recipe information 80. Thus, a user can perform arrangement and preparations for causing cooking device 1 to cook dishes automatically, while referring to recipe information 80 displayed on display 103A. When placing foods in cooking device 1, operating a start button of operator 9a, and the like, a user can start automatic cooking.

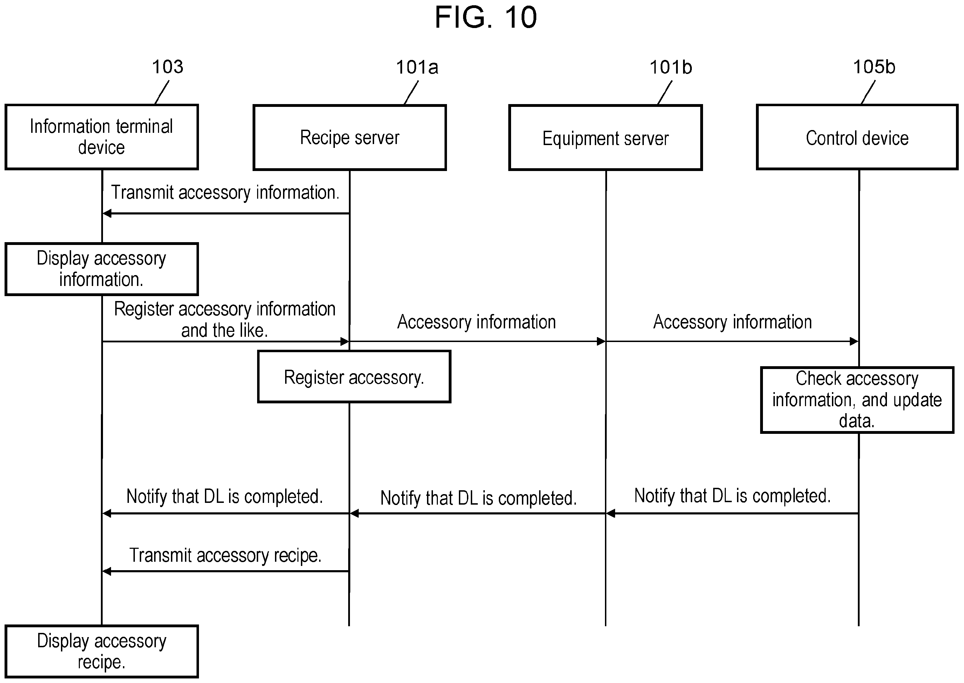

FIG. 10 is a sequence diagram showing a procedure from display of accessory information and registration of an accessory to completion of preparation for cooking start or completion of download in a cooking device. An accessory (attachment) of cooking device 1 includes steamer 30 (hereinafter, also referred to as "a steam pot") and grill plate 11.

The accessory of cooking device 1 includes not only an accessory that is packaged together with cooking device 1, but also an accessory, which is not packaged together with cooking device 1, that needs to be purchased separately. In the present exemplary embodiment, the accessory packaged together with cooking device 1 is square plate 20. The accessories, which are not packaged together with cooking device 1, that need to be purchased separately are steamer 30 and grill plate 11. However, at least any one of square plate 20, steamer 30, or grill plate 11 may be packaged together with cooking device 1. All of these accessories do not need to be packaged together with cooking device 1, but may be purchased separately.

As for a recipe to be cooked using square plate 20, the sequence name and the control software corresponding thereto are downloaded to cooking device 1 in advance. Square plate 20 is an accessory suitable for oven-heat cooking in which upper heater 10a and lower heater 10b of cooking device 1 are used.

As shown in FIGS. 8 and 9, when a user selects a recipe to be cooked using square plate 20 in information terminal device 103, setting information and the like related to the selected recipe are downloaded to control device 105b of cooking device 1 through recipe server 101a and equipment server 101b. When a download request is transmitted, information terminal device 103 displays screen 82, which indicates completion of download, on the display 103A to notify that the download has been completed.

When receiving the setting information and the like, control device 105b of cooking device 1 causes display 9b to display screen 92. After that, control device 105b causes display 9b to display screen 93. Display screen 93 is a screen for starting automatic cooking of dishes using the received setting information and the like.

As shown in FIG. 10, recipe server 101a provides accessory information to information terminal device 103. Information terminal device 103 displays the accessory information on display 103A. When a user desires to select a recipe to be cooked using steamer 30 or grill plate 11 in information terminal device 103, the accessory is registered first. Herein, steamer 30 and grill plate 11 are accessories which a user purchases separately.

In this case, the application executes the following operations in information terminal device 103. Information such as a model of cooking device 1, which is to be used by a user, is registered in recipe server 101a. A connection between information terminal device 103 and equipment server 101b is established, and a connection between information terminal device 103 and cooking device 1 is established. Furthermore, information on the accessory of cooking device 1, which is to be used by a user, is newly registered in recipe server 101a.

Thus, information terminal device 103 can transmit setting information and the like, which are related to recipes of the registered accessory, to cooking device 1. As a result, the registered accessory can be used to perform cooking in cooking device 1.

Herein, a procedure of registering an accessory will be described in detail. In information terminal device 103, the application requests a DL menu to recipe server 101a according to user's instructions. The DL menu indicates information of which accessory information and model information corresponding to an accessory can be downloaded to cooking device 1 from recipe server 101a.

According to a model of cooking device 1, recipe server 101a extracts information on an accessory usable in cooking device 1. Recipe server 101a generates a DL menu indicating a type of the extracted accessory as a list, and transmits it to information terminal device 103.

Information terminal device 103 displays the DL menu, which is received from recipe server 101a, on display 103A. When an accessory, which is to be used by a user, is selected from the DL menu, information terminal device 103 transmits the selected accessory to recipe server 101a. Recipe server 101a registers information indicating a type of the accessory received from information terminal device 103.

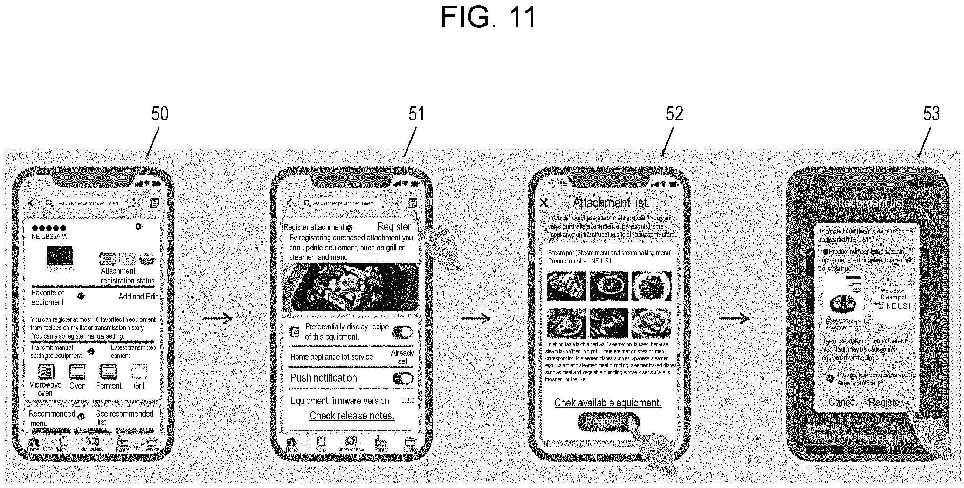

FIG. 11 is a view showing transition of the display screen displayed on display 103A of information terminal device 103 during execution of the procedure shown in FIG. 10.

As shown in FIG. 11, when a user touches an icon written as "kitchen appliance" on an initial screen of the application displayed on display 103A of information terminal device 103, screen 50 is displayed. Screen 50 indicates a model list of kitchen appliances. For instance, when a user touches an icon written as "attachment registration state" related to "NE-UBS5 A-W" serving as an example of the model, display 103A displays screen 51 for registering an attachment.

Next, when a user touches as icon written as " register" on screen 51 to register an attachment, display 103A displays screen 52 indicating a list of attachments that can be registered. When a user touches an icon written as "register" with respect to the attachment (steam pot in FIG. 11) which the user desires to register, display 103A displays screen 53 for checking a product number (NE-US1 in FIG. 11) of the accessory.

When checking that the displayed product number is a product number of the accessory desired to be registered, a user touches an icon written as "register" on screen 53.

As shown in FIG. 9, information terminal device 103 displays screen 81 on display 103A, and transmits registration information of the accessory to cooking device 1.

In cooking device 1, control device 105b checks information on the accessory, and stores the information in storage C. Display 103A displays screen 82 for notifying that the registration information of the accessory has been downloaded completely.

These screen transitions will be described with reference to FIG. 10. Information terminal device 103 transmits registration information of the accessory, which is selected by a user, to control device 105b of cooking device 1 through recipe server 101a and equipment server 101b.

When checking the information on the accessory, control device 105b determines that the accessory have been registered. Control device 105b opens a sequence name related to the registered accessory, or the like, thereby updating data so as to open a control software for cooking by using the accessory or the like. Thus, cooking device 1 can use the registered accessory to cook.

When the registration information of the accessory has been downloaded completely, recipe server 101a opens an accessory recipe. The accessory recipe is a recipe for cooking by using the accessory. Information terminal device 103 displays the accessory recipe on display 103A, thereby enabling a user to select the accessory recipe.

If registration of an accessory of cooking device 1 is not completed, a cooking recipe for cooking by using the accessory may not be provided to a user.

After registration of the accessory, cooking device 1 may display the accessory recipe on display 9b, thereby enabling a user to select the accessory recipe through operator 9a.

As described above with reference to FIGS. 8 and 9, when a user selects an accessory recipe, setting information and the like related to the accessory recipe may be downloaded to control device 105b to start cooking.

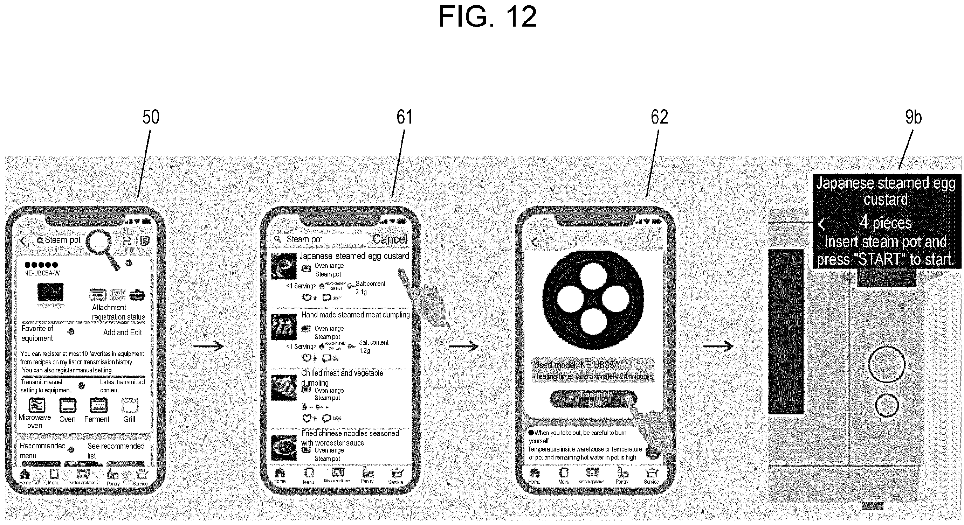

FIG. 12 shows transition of a display screen until when setting information and the like related to an accessory recipe are downloaded to control device 105b to start cooking during execution of the procedure shown in FIG. 8. With reference to FIG. 12, an example of screen transition in which setting information and the like related to a certain accessory recipe are downloaded to control device 105b to start cooking will be described.

As shown in FIG. 12, when a user searches for "steam pot" in a search column located in an upper part of screen 50, screen 61 is displayed. Screen 61 indicates a list of cooking menus for a steam pot. Herein, when a user selects "Japanese steamed egg custard," screen 62 displays a pattern image showing four pieces of Japanese steamed egg custard, a model name (NE-UBS 5A) of cooking device 1 to be used, and an accessory recipe indicating a cooking time of approximately 24 minutes (see screen 62 in FIG. 12). Note that, if a steam pot is used, microwave heating will be carried out.

When an icon written as "transmit to Bistro" is pressed, setting information and the like related to the accessory recipe, which is a recipe for cooking Japanese steamed egg custard by using a steam pot, are transmitted to cooking device 1.

Control device 105b of cooking device 1 causes display 9b to display the number of servings of dish (Japanese steamed egg custard). Further, control device 105b also causes display 9b to display that heating is started when a start button on an upper side of operator 9a is pressed after completion of preparations. When a user presses the start button, cooking device 1 starts the cooking set above.

As described above with reference to FIGS. 8 and 9, information terminal device 103 transmits setting information and the like to cooking device 1 according to user's instructions, and cooking device 1 starts cooking based on the transmitted setting information and the like.

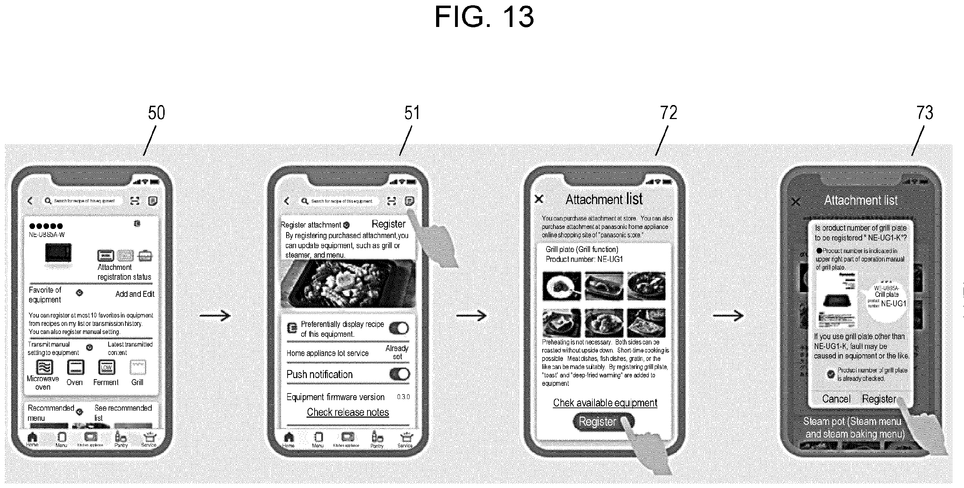

Next, a series of steps from attachment registration related to an accessory of "grill plate" to cooking start will be described. FIG. 13 is another view showing transition of the display screen displayed on display 103A of information terminal device 103 during execution of the procedure shown in FIG. 10.

As shown in FIG. 13, when a user presses an icon written as "kitchen appliance" on an initial screen of the application displayed on display 103A, screen 50 is displayed. Screen 50 indicates a model list of kitchen appliances. For instance, when an icon written as "attachment registration state" is pressed in "NE-UBS5 A-W" serving as an example of the model, the screen is transferred to screen 51 for registering an attachment.

Next, in order to register an attachment, when a user touches an icon written as "register" in screen 51, display 103A displays screen 72 showing a list of attachments that can be registered. When a user touches an icon written as "register" with respect to an attachment (grill plate in FIG. 13) which the user desires to register, display 103A displays screen 73 for checking a product number (NE-UG1 in FIG. 13) of the accessory.

When checking that the displayed product number is a product number of the accessory desired to be registered, a user touches an icon written as "register" on screen 73.

As shown in FIG. 9, information terminal device 103 displays screen 81 on display 103A, and transmits registration information of the accessory to cooking device 1.

In cooking device 1, control device 105b checks information on the accessory, and stores the information in storage C. Display 103A displays screen 82 for notifying that the registration information of the accessory has been downloaded completely.

These screen transitions will be described with reference to FIG. 10. Registration information of the accessory, which is selected by a user, is transmitted to information terminal device 103, recipe server 101a, equipment server 101b, and control device 105b of cooking device 1.

When checking information on the accessory, control device 105b determines that the accessory has been registered. Control device 105b opens a sequence name related to the registered accessory, or the like, thereby updating data so as to open a control software for cooking by using the accessory or the like. Thus, cooking device 1 can use the registered accessory to cook.

When the registration information of the accessory has been downloaded completely, recipe server 101a opens an accessory recipe. Information terminal device 103 displays the accessory recipe, which is a recipe for cooking by using the accessory, on display 103A, thereby enabling a user to select the accessory recipe.

If registration of an accessory of cooking device 1 is not completed, a cooking recipe for cooking by using the accessory may not be provided to a user.

After registration of the accessory, cooking device 1 may display the accessory recipe on display 9b, thereby enabling a user to select the accessory recipe through operator 9a.

As described above with reference to FIGS. 8 and 9, when a user selects an accessory recipe, setting information and the like related to the accessory recipe may be downloaded to control device 105b to start cooking.

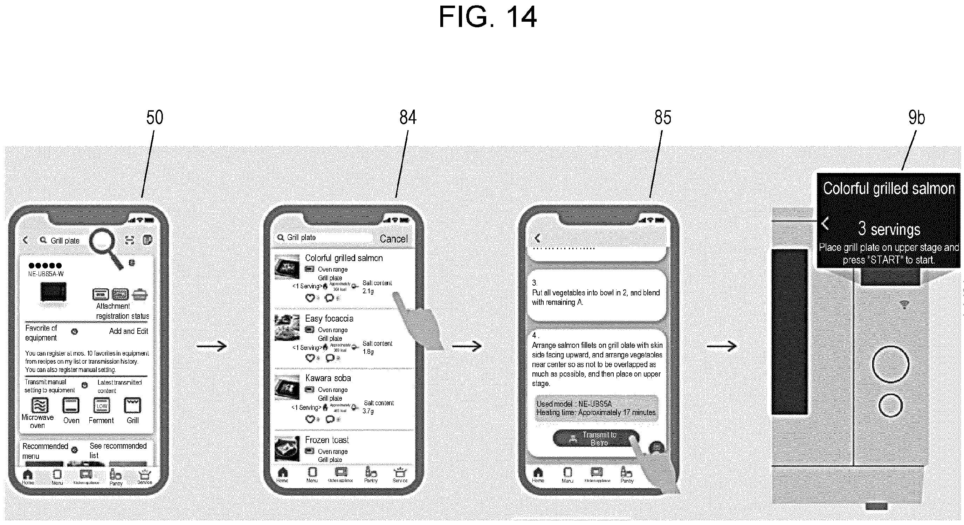

FIG. 14 shows transition of a display screen until when setting information and the like related to an accessory recipe are downloaded to control device 105b to start cooking during execution of the procedure shown in FIG. 8, like FIG. 12. With reference to FIG. 14, screen transition in the case where setting information and the like related to another accessory recipe are downloaded to control device 105b to start cooking will be described as an example.

As shown in FIG. 14, when "grill plate" is searched in a search box located in an upper part of screen 50, screen 84 is displayed. Screen 84 indicates a list of cooking menus for a grill plate. Herein, when "colorful grilled salmon" is selected, screen 85 displays a model name (NE-UBS 5A) of cooking device 1, which is to be used, and an accessory recipe indicating a heating time of approximately 17 minutes (see screen 85 in FIG. 14).

When a user touches an icon written as "transmit to Bistro," setting information and the like related to the accessory recipe, which is a recipe for cooking colorful grilled salmon by using a grill plate, are transmitted to cooking device 1.

Cooking device 1 causes display 9b to display the number of servings of dish (colorful grilled salmon). Further, cooking device 1 also causes display 9b to display that heating is started when a start button on an upper side of operator 9a is pressed after completion of preparations. When a user presses the start button, cooking device 1 start the cooking set above.

As described above with reference to FIGS. 8 and 9, information terminal device 103 transmits setting information and the like to cooking device 1 according to user's instructions. Cooking device 1 starts cooking based on the transmitted setting information and the like.

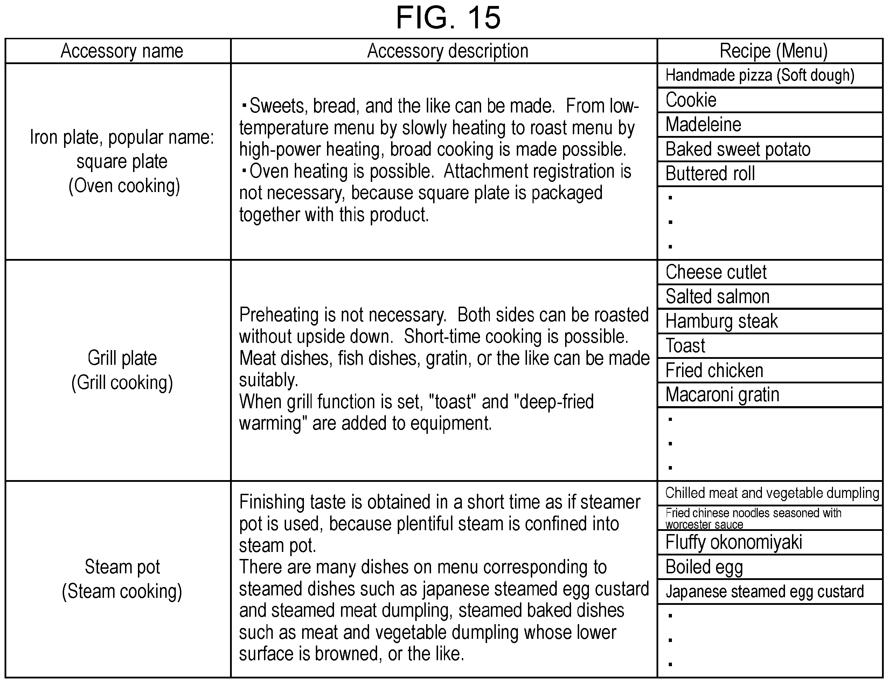

FIG. 15 shows an accessory name, an accessory description, and a list of the related recipes (cooking menus).

As to a recipe for cooking by using square plate 20, a sequence name and a control software corresponding to the recipe are downloaded to cooking device 1 in advance. Square plate 20 is suitable for oven-heat cooking.

As to steamer 30 (steam pot) and grill plate 11, information on the accessories of cooking device 1 is newly registered in recipe server 101a through the application in information terminal device 103. Thus, information terminal device 103 can transmit setting information and the like related to recipes for the accessories registered in cooking device 1. As a result, cooking device 1 can use the registered accessories to perform cooking.

A control sequence of a recipe for each accessory will be exemplarily described.

Control device 105b uses square plate 20 to perform cooking of "cookie" by oven heating. For instance, control device 105b controls an upper heater and a lower heater based on temperature, which is detected using a temperature sensor, of a heating target to heat the heating target for substantially 20 minutes after preheating at approximately 180°C.

Control device 105b uses grill plate 11 to perform cooking of "hamburger (4 servings)" by grill heating. For instance, control device 105b uses upper heater 10a to heat a heating target for substantially 10 minutes, while heating the heating target for substantially 6 minutes by microwave heating with an output power of 800W.

Control device 105b uses steamer 30 (steam pot) to perform cooking of "boiled egg." For instance, control device 105b heats a heating target for substantially 15 minutes by microwave heating with an output power of 600W.

In the present exemplary embodiment, recipe server 101a retains parameters, such as a type of heating device to be used, a heating output, and cooking time, for each recipe name as setting information. Recipe server 101a transmits registration information of an accessory and setting information and the like of a recipe to control device 105b. Thus, cooking device 1 can perform various kinds of cooking.

Note that, cooking device 1 may retain setting information and the like of a recipe. After comparing with setting information and the like that have been transmitted from server 101, cooking device 1 may start cooking based on the setting information and the like. Without retaining setting information and the like of a recipe, cooking device 1 may newly store setting information and the like, which is to be transmitted from server 101, and start cooking based on the setting information and the like.

As another exemplary embodiment, a two-dimensional code may be applied to an accessory body, an operation manual of an accessory, or a package of an accessory. In the two-dimensional code, information such as a product number, a manufacturer's serial number, and a production date of an accessory is embedded. In this case, information terminal device 103 uses a built-in camera to read the two-dimensional code. With this configuration, time and effort for registering an accessory can be saved.

Information such as a model name of registered cooking device 1, and a product number, a manufacturer's serial number, and a production date of an accessory may be associated with a user, and retained in server 101. Thus, server 101 can grasp the frequency of use of an accessory recipe or the like. In this case, based on the information of an accessory and cooking device 1, server 101 can notify a user of a life thereof, or can provide a new accessory recipe or the like.

A first aspect of the present disclosure is a recipe presentation method for a cooking device. The recipe presentation method of the present aspect includes performing registration that enables cooking by using an accessory of the cooking device, and providing, to the cooking device, setting information and the like related to a cooking recipe for cooking by using the accessory.

According to the present aspect, a convenience of cooking by using the accessory of the cooking device is increased for a user who owns the accessory requiring the registration.

In addition to the first aspect, as to an accessory requiring the registration that enables cooking by using the accessory, a second aspect of the present disclosure can provide, to the cooking device, the setting information and the like related to the cooking recipe for cooking by using the accessory, with the registration.

As to an attachment not requiring the registration that enables cooking by using the accessory of the cooking device, the second aspect of the present disclosure can provide, to the cooking device, the setting information and the like related to the cooking recipe for cooking by using the accessory, without the registration.

According to the present aspect, a convenience of cooking by using the accessory of the cooking device is also increased for a user who owns the accessory not requiring the registration.

In addition to the first aspect or the second aspect, a third aspect of the present disclosure includes providing the cooking recipe for cooking by using the accessory to a user, when the registration that enables cooking by using the accessory of the cooking device has been completed.

According to the present aspect, cooking recipes of the registered accessory can be browsed freely and selected optionally by a user. For a user who owns an accessory requiring the registration, a convenience of cooking by using the accessory of the cooking device is increased.

In addition to any of the first aspect to the third aspect, a fourth aspect of the present disclosure includes notifying a user of completion of the registration, when the registration that enables cooking by using the accessory of the cooking device has been completed.

According to this aspect, a user is notified that the registration, which enables cooking by using the accessory of the cooking device, has been completed. After the notification, cooking recipes of the registered accessory can be browsed freely and selected optionally by a user. For a user who owns an accessory requiring the registration, a convenience of cooking by using the accessory of the cooking device is increased.

In addition to any of the first aspect to the fourth aspect, in a fifth aspect of the present disclosure, unless the registration that enables cooking by using the accessory of the cooking device has been completed, the cooking recipe for cooking by using the accessory is not provided to a user.

According to the present aspect, a user who owns no accessory requiring the registration can be prevented from referring to a cooking recipe for cooking by using the accessory requiring the registration accidentally.

A sixth aspect of the present disclosure is a cooking device that can communicate with a server through the Internet. The cooking device of the present aspect has a wireless communication module, and a control device that stores registration that enables cooking by using an accessory of the cooking device. When the registration that enables cooking by using the accessory is performed in the control device, a control sequence related to a cooking recipe for cooking by using the accessory is made available.

According to the present aspect, a convenience of cooking by using the accessory of the cooking device is increased for a user who owns the accessory requiring the registration.

A seventh aspect of the present disclosure is a recipe presentation program for a cooking device. The recipe presentation program of the present aspect includes a procedure of performing registration that enables cooking by using an accessory of the cooking device, and a procedure of providing, to the cooking device, setting information and the like related to a cooking recipe for cooking by using the accessory. The present aspect may be a recording medium that stores the recipe presentation program.

According to the present aspect, a convenience of cooking by using the accessory of the cooking device is increases for a user who owns the accessory requiring the registration.

An eighth aspect of the present disclosure is a recipe presentation system that has a server, a cooking device, and an information terminal device. The server transmits information for performing registration that enables cooking by using an accessory of the cooking device to the information terminal device. The information terminal device provides, to the cooking device, setting information and the like related to a cooking recipe for cooking by using the accessory, with the registration.

According to the present aspect, a convenience of cooking by using the accessory of the cooking device is increased for a user who owns the accessory requiring the registration.

### INDUSTRIAL APPLICABILITY

The recipe presentation method of the present disclosure is applicable to home-use or business-use home appliances, e.g., cooking equipment and a refrigerator.

### REFERENCE MARKS IN THE DRAWINGS

1 cooking device
3 housing
3 A front frame
3B front opening
5 heating chamber
5a upper wall
5b right-hand side wall
5c left-hand side wall
5d back wall
5e bottom wall
7 door
7a handle
9a operator
9b display
10 heating device
10a upper heater
10b lower heater
10c magnetron
11 grill plate
11a front surface
11b back surface
13 outer frame
20 square plate
30 steamer
30a lid part
30b placing part
30c water storing part
31 hole
32 front surface
33 rim part
34 back surface
50, 51, 52, 53, 61, 62, 72, 73, 81, 82, 83, 84, 85, 91, 92, and 93 screen
80 recipe information
90 top screen
101 server
101a recipe server
101b equipment server
102 Internet
103 information terminal device
103A display
104 wireless access point
105a wireless communication module
105b control device

## Claims

1. A recipe presentation method for a cooking device, the recipe presentation method comprising:
performing registration that enables cooking by using an accessory of the cooking device; and
providing setting information to the cooking device, the setting information being related to a cooking recipe for cooking by using the accessory.

2. The recipe presentation method according to claim 1, wherein
with respect to an accessory requiring the registration that enables cooking by using the accessory, providing, to the cooking device, the setting information related to the cooking recipe for cooking by using the accessory is allowed, with the registration, and
with respect to an accessory not requiring the registration that enables cooking by using the accessory, providing, to the cooking device, the setting information related to the cooking recipe for cooking by using the accessory is allowed, without the registration.

3. The recipe presentation method according to claim 1 or 2, further comprising
providing the cooking recipe for cooking by using the accessory to a user, when the registration that enables cooking by using the accessory of the cooking device has been completed.

4. The recipe presentation method according to claim 1 or 2, further comprising
notifying a user of completion of the registration, when the registration that enables cooking by using the accessory of the cooking device has been completed.

5. The recipe presentation method according to claim 1 or 2, wherein
providing, to a user, the cooking recipe for cooking by using the accessory is not performed, unless the registration that enables cooking by using the accessory of the cooking device is completed.

6. A cooking device that is allowed to communicate with a server through Internet, the cooking device comprising:
a wireless communication module; and
a control device storing registration that enables cooking by using an accessory of the cooking device,
wherein
the control device is allowed to use a control sequence related to a cooking recipe for cooking by using the accessory, when the registration that enables cooking by using the accessory is performed.

7. A recipe presentation program for a cooking device, the recipe presentation program comprising:
a procedure of performing registration that enables cooking by using an accessory of the cooking device; and
a procedure of providing setting information to the cooking device, the setting information being related to a cooking recipe for cooking by using the accessory.

8. A recipe presentation system comprising:
a server;
a cooking device; and
an information terminal device,
wherein
the server is configured to transmit information for performing registration that enables cooking by using an accessory of the cooking device to the information terminal device, and
the information terminal device is configured to provide setting information to the cooking device, with the registration, the setting information being related to a cooking recipe for cooking by using the accessory.
